# EUROPÄISCHE PATENTSCHRIFT

(11) **EP 1 232 423 B1**
(45) Veröffentlichungstag und Bekanntmachung des Hinweises auf die Patenterteilung: **10.03.2004**
(21) Anmeldenummer: 99962096.6
(22) Anmeldetag: 26.11.1999
(51) Int. Cl.: G05B 19/401, G05B 19/404, E05F 15/16, F16H 1/16

(54) **VORRICHTUNG ZUR ERFASSUNG DES AXIALSPIELS**
DEVICE FOR DETECTING THE AXIAL PLAY
DISPOSITIF DE DETECTION DE JEU AXIAL

(43) Veröffentlichungstag der Anmeldung: 21.08.2002
(73) Patentinhaber: Siemens Aktiengesellschaft, 80506 München (DE)
(72) Erfinder: GREUBEL, Peter, D-97688 Bad Kissingen (DE)
(86) Internationale Anmeldenummer: PCT/DE1999/003776
(87) Internationale Veröffentlichungsnummer: WO 2001/038944

(56) Entgegenhaltungen:
- EP-A- 0 133 527
- WO-A-97/43564
- DE-A- 4 138 194
- DE-C- 19 632 139

## Beschreibung

Die Erfindung bezieht sich auf ein Verfahren und eine Vorrichtung zur Erfassung des Axialspiels einer mit einem Getriebeabtrieb kämmenden Getriebewelle, insbesondere einer mit einem Schneckenrad kämmenden Schneckenwelle eines Getriebemotor-Stellantriebes gemäß den Patentansprüchen 1 und 6, derartige Stellantriebe mit einem Kommutatormotor und einem anschließenden Schneckengetriebe sind insbesondere zum motorischen Antrieb von Schließsystemen wie Fenstern bzw. Schiebedächern in Kraftfahrzeugen vorgesehen.

Antriebe der vorgenannten Art weisen, insbesondere bei aus einem Motorgehäuse und einem Getriebegehäuse mit durchgehender Motor-Getriebewelle als Massenartikel gefertigten Bauteileinheiten, toleranzbedingte unerwünschte Axialspiele auf, die bei Drehrichtungsumkehr zu Anschlaggeräuschen der Motor-Getriebewelle an beidseitigen axialen Endanschlägen führen können.

Zur Begrenzung eines unzulässigen Axialspiels ist es z.B. durch die EP 0 133 527 B2 bekannt, jeweils eine Distanz-Anlaufscheibe mit aufgrund eines vorherigen Vergleichs zwischen Ist-Axialspiel und Soll-Axialspiel entsprechender Scheibendicke als Anlaufteil für zumindest eine axiale Stirnseite der Getriebewelle vorzusehen, die in die Motorwelle des an das die Getriebewelle aufnehmende Getriebegehäuse angeflanschten Motorgehäuses eines Kommutatormotors übergeht.

Gemäß Aufgabe vorliegender Erfindung soll mit geringem meßtechnischen Aufwand das jeweilige Axialspiel erfaßt bzw., insbesondere bei bereits in Getriebe- bzw. Motorgehäuse montierten Getriebe- bzw. Motorantriebsteilen, die bereits vollzogene Axialspieleinstellung auf ihre Richtigkeit überprüft werden können.

Die Lösung dieser Aufgabe gelingt durch ein Verfahren und eine Vorrichtung gemäß den Hauptansprüchen, vorteilhafte Ausgestaltungen der Erfindung sind jeweils Gegenstand der Unteransprüche.

Durch die Blockierung, z.B. Festbremsung, des Getriebeabtriebes bei bereits montierten Getriebe- bzw. Motorbauteilen und damit bereits in Eingriff mit dem Getriebeabtrieb stehender Getriebewelle, wird diese durch den motorischen Antrieb unter Abstützung gegenüber dem Getriebeabtrieb translatorisch bewegt, so daß das tatsächliche Axialspiel meßbar ist und entweder der notwendige Ausgleich bestimmt oder bei vollzogenem Ausgleich dieser überprüft, z.B. bei einer fehlerhaft nicht zugeführten bzw. nach Zuführung im weiteren Montagevorgang, insbesondere beim Fetten, wieder verlorenen Distanz-Anlaufscheibe, dieser Mangel erkannt werden kann.

Eine besonders einfache Bestimmung des jeweils das Axialspiel repräsentiertenden translatorischen Stellweges ist durch Auswertung, insbesondere Zählung, der durch die Lamellenunterbrechung des Kommutatormotors bedingten Periodizität, d.h. der Impulse, des mit einer entsprechenden Welligkeit versehenen Verlaufs des Motorstroms bzw. der Motorspannung des antreibenden Kommutator möglich.

Die Bestimmung der Position eines von einer Schneckengetriebe-Kommutatormotor-Antriebseinheit betriebsmäßig verstellten und translatorisch oder rotatorisch über die Schneckenwelle und das damit kämmende Schneckenrad bewegten Teiles durch Auswertung der kommutierungsbedingten Welligkeit des Motorstromes ist z.B. durch die DE 41 38 194 A1 an sich bekannt.

Die Erfindung sowie weitere vorteilhafte Ausgestaltungen der Erfindung gemäß Merkmalen der Unteransprüche werden im folgenden anhand schematischer Ausführungsbeispiele in der Zeichnung näher erläutert; darin zeigen:
- FIG 1: den zeitlichen Verlauf des Motorstroms mit einer einem zu großen Axialspiel entsprechenden hohen kommutatorbedingten Welligkeits-Impulszahl zwischen den Endanschlägen der Getriebewelle;
- FIG 2: den zeitlichen Verlauf des Motorstroms mit einer einem vorgesehenen Axialspiel entsprechenden niedrigen kommutatorbedingten Welligkeits-Impulszahl zwischen den Endanschlägen der Getriebewelle;
- FIG 3: eine bekannte Anordnung zur Einstellung des Axialspiels einer Getriebewelle einer SchneckengetriebeKommutatormotor-Antriebseinheit mittels einer Distanz-Anlaufscheibe mit aufgrund eines Vergleichs zwischen Ist-Axialspiel und Soll-Axialspiel in jedem Einzelfall definierten Scheibendicke mit erfindungsgemäß nachgerüsteter Bremse zur Blockierung des Getriebeabtriebs und Auswertevorrichtung zur Bestimmung des Axialspiels.

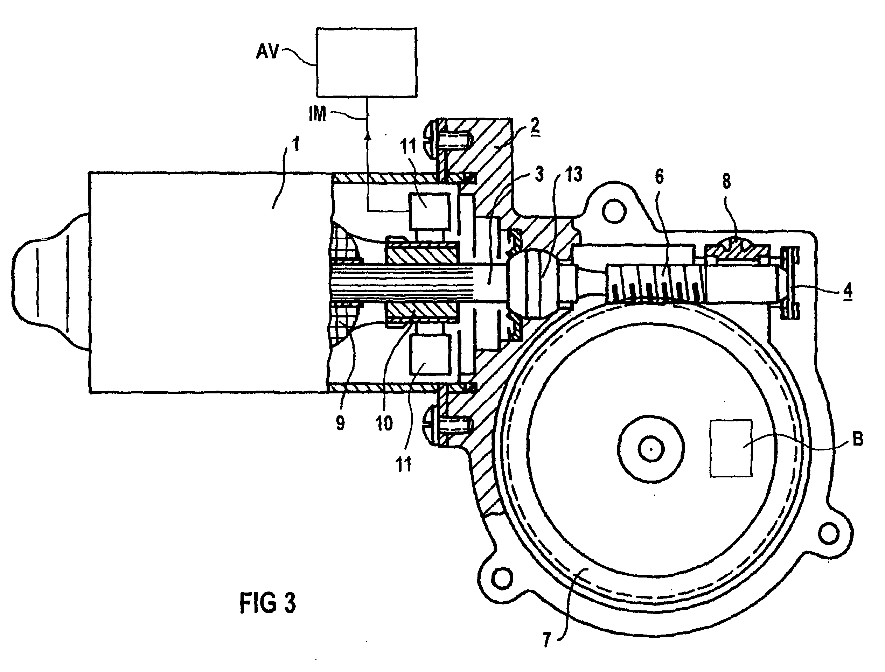

Der in FIG 3 dargestellte bekannte Fensterheber-Getriebemotor für ein Kraftfahrzeug besteht im wesentlichen aus einem halbschalenförmigen Getriebe-Gehäuseteil 2 und einem an dessen linke Seite angeflanschten elektrischen Kommutatormotor mit einem gerollten zylindrischen Motor-Gehäuseteil 1. In das halbschalenförmige Getriebe-Gehäuseteil 2 ragt eine Getriebewelle 3 als Verlängerung der Rotorwelle des Kommutatormotors, die an ihrem motorseitigen Ende einen Rotor 9 und einen von einem Bürsten-System 11 beschliffenen Kommutator 10 bzw. an ihrem rechten freien Wellenende eine Schnecke 6 aufnimmt, die mit einem Getriebeabtrieb 7 in Form eines Schneckenrades betriebsmäßig in Eingriff steht; das Schneckenrad kann seinerseits in hier nicht dargestellter Weise mit weiteren Antriebsmitteln, insbesondere einer Seilscheibe eines Seilzug-Fensterhebers, gekuppelt sein. Das rechte freie Wellenende der Getriebewelle 3 ist im Getriebe-Gehäuseteil 2 in einem Kalottenlager 13 gelagert und gleichzeitig gegen unzulässige radiale Durchbiegungen aufgrund des Schneckengetriebes durch ein Abstützlager 8 gesichert.

Sämtliche Getriebebauteile sind nach dem "Geigenkasten-Prinzip" in das halbschalenförmige Getriebe-Gehäuseteil 2 einlegbar, das abschließend durch ein hier nicht dargestelltes weiteres Getriebe-Gehäuseteil, insbesondere einen Getriebedeckel, verschließbar ist. In ähnlicher Weise ist auch eine zur Begrenzung bzw. zur Einstellung eines definierten Axialspiels vorgesehene Distanz-Anlaufscheibe 4 in den Getriebe-Gehäuseteil 2 zwischen dem axialen Wellenende der Getriebewelle 3 und dem gegenüberliegenden Getriebe-Gehäuseteil 2 im Sinne einer Vormontage einsteckbar.

Zur Ermittlung des jeweiligen Axialspiels bzw. der notwendigen Maßnahme zur Einhaltung eines definierten Axialspiels, insbesondere in Form einer zwischen dem Wellenende der Getriebewelle 3 und axial gegenüberliegenen Getriebe-Gehäuseteil 2 einzusteckenden Distanz-Anlaufscheibe 4, wird der Getriebeabtrieb 7, im vorliegenden Fall die Seilscheibe, durch eine in FIG 3 angedeutete Bremse B blockiert und anschließend der Kommutatormotor mit Strom, vorzugsweise mit Konstantstrom, beaufschlagt, so daß die Getriebewelle 3 bei gleichzeitiger Abstützung bzw. Abwälzung der Verzahnung ihrer Schnecke 6 an der im Eingriff stehenden Gegenverzahnung des Getriebeabtriebs 7 translatorisch bis zu ihrem einen Endanschlag bewegt wird. Anschließend wird die Stromrichtung umgepolt und die Getriebewelle 3 bei weiterhin blockiertem Getriebeabtrieb 7 bis zu ihrem anderen Endanschlag translatorisch bewegt.

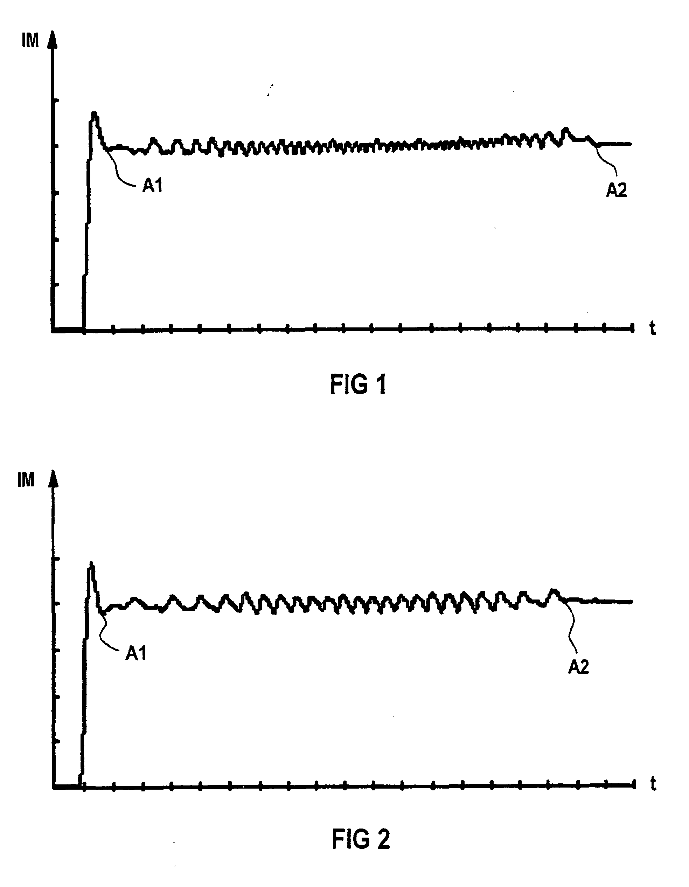

Die gemäß FIG 1 bzw. FIG 2 im zeitlichen Stromverlauf IM = f(t) aufgrund der durch die Lamellenübergänge des Kommutators bedingten Einbrüche werden - z.B. in der aus der DE 41 38 194 A1 bekannten Art gegebenenfalls impulsverstärkt - in einer in FIG 3 angedeuteten Auswertevorrichtung AV - gezählt und zu einer das Axialspiel repräsentierenden Stellgröße verarbeitet; die Zählung kann sowohl hinsichtlich der Low-Signale als auch der High-Signale sowie deren Kombination erfolgen.

FIG 1 zeigt die Welligkeit des Motorstromes IM zwischen einem ersten Endanschlag A1, der durch einen ersten Lamellenübergangssprung im Stromverlauf durch ein Low-Signal nach einem Anfahrstromimpuls im Zeitpunkt des Beginns einer Rotation der Getriebewelle 3 repräsentiert ist, und einem zweiten Endanschlag A2, der durch ein Low-Signal beim anschließenden Stillstand der Getriebewelle 3 nach Durchlauf des Axialspielweges und dem damit verbundenen Ende der Welligkeit des Motorstroms IM gekennzeichnet ist.

Nach einer Ausgestaltung der Erfindung wird die erfindungsgemäße Erfassung des Axialspiels auch zur Überwachung einer fertigungsgerechten Bestückung eines z.B. aus der EP 0 133 527 B2 bekannten Getriebemotor-Stellantriebes mit Distanz-Anlaufscheiben 4 dadurch benutzt, daß vor der Endmontage eines die ansonsten vollbestückte Bauteileinheit 2;3 abschließenden Getriebedeckels der translatorische Stellweg mit dem einem definierten Axialspiel entsprechenden Stellweg verglichen wird und dadurch erkennbar ist, ob im vorherigen Fertigungsprozeß, insbesondere bei einer Getriebefettzuführung, die bereits vormontierte Distanz-Anlaufscheibe 4 verlorengegangen ist.

FIG 2 zeigt als Beispielsfall das Welligkeitsprofil eines Prüflings mit vorhandener Axialspieleinstellung durch eine entsprechend dimensionierte Distanz-Anlaufscheibe 4; FIG 1 zeigt den gleichen Prüfling ohne diese Distanz-Anlaufscheibe. Aus einem Vergleich beider Diagramme ist entnehmbar, daß zwischen den beiden durch den Beginn einer Welligkeit mit beginnender Rotation der Getriebewelle 3 bzw. das Ende einer Welligkeit bei beendeter Rotation der Getriebewelle 3 gekennzeichneten Endanschlägen A1;A2 durch die unterschiedliche Zahl von Welligkeits-Impulsen im Vergleich zwischen FIG 1 und FIG 2 auf einen unterschiedlichen, insbesondere im Falle einer fehlerhaft nicht vorhandenen Distanz-Anschlagscheibe größeren, translatorischen Stellweg der Getriebewelle 3 relativ zum blockierten Gewindeabtrieb 7 geschlossen werden kann.

In vorteilhafter Weise ist diese Zählung unabhängig von der Rotationsgeschwindigkeit der Getriebewelle, da sich diese nur auf die zeitliche Dichte der Zählimpulse auswirkt; zweckmäßigerweise erfolgt die Prüfung bei jeweils konstantem Strom, um eine vergleichende einfache Berechnung des Stellweges aus den Zählimpulsen gemäß FIG 1 einerseits und FIG 2 andererseits zu begünstigen.

## Patentansprüche

1. Verfahren zur Erfassung des Axialspiels einer mit einem Getriebeabtrieb (7) kämmenden Getriebewelle (3), insbesondere einer mit einem Schneckenrad kämmenden Schneckenwelle eines Getriebemotor-Stellantriebs, wobei die Erfassung des Axialspiels durch die Ermittlung des translatorischen Stellweges der rotatorisch angetriebenen Getriebewelle (3) zwischen ihren das Axialspiel begrenzenden axialen Endanschlägen (A1 bzw.A2) bei gleichzeitig blockiertem (Bremse B) Getriebeabtrieb geschieht.

2. Verfahren nach Anspruch 1
- mit einem die Getriebewelle (3) rotatorisch antreibenden Kommutatormotor (1);
- mit einer Ermittlung des translatorischen Stellweges durch Auswertung der durch die Lamellen des Kommutators (10) kommutierungsbedingten Welligkeit des Motorstroms (IM) bzw. der Motorspannung in einer Auswertevorrichtung (AV).

3. Verfahren nach Anspruch 2
- mit einer Auswertung der kommutierungsbedingten Welligkeit durch Zählung einer den Lamellenübergängen des Kommutators (10) entsprechenden Pulszahl des Motorstroms (IM) bzw. der Motorspannung.

4. Verfahren nach zumindest einem der Ansprüche 1 bis 3
- mit einem elektromotorischen Antrieb der Getriebewelle (3) bis zu ihrem einen axialen Endanschlag (A1 bzw.A2);
- mit einem elektromotorischen Antrieb, insbesondere Konstantstrom-Antrieb, bis zu dem anderen axialen Endanschlag (A1 bzw.A2);
- mit einer Auswertung der Welligkeit des Motorstroms (IM) bzw. der Motorspannung zwischen den beiden Endanschlägen (A1 bzw.A2).

5. Verfahren nach zumindest einem der Ansprüche 1 bis 4
- mit einer Axialspieleinstellung durch Zwischenlage von Distanz-Anlaufscheiben (4) zwischen einem Getriebewellenende und einem gegenüberliegenden zugehörigen Endanschlag;
- mit einer Feststellung einer Falschbestückung bzw. einer Fehlbestückung mit einer Distanz-Anlaufscheibe (4) durch Vergleich des jeweils translatorischen Ist-Stellweges mit einem im Sinne eines definierten Axialspielausgleichs vorherbestimmten Soll-Stellweg.

6. Vorrichtung, eingerichtet zur Durchführung des Verfahrens nach einem der Ansprüche 1-5, mittels der das Axialspiel einer mit einem Getriebeabtrieb kämmenden, elektromotorisch angetriebenen Getriebewelle erfasst wird, **gekennzeichnet durch**
- eine Bremsvorrichtung, **durch** die der Getriebeabtrieb blockierbar ist, und
- eine Auswertevorrichtung, die den translatorischen Stellweg der Getriebewelle **durch** Auswertung der kommutierungsbedingten Welligkeit des Motorstromes oder der Motorspannung des elektromotorischen Antriebs ermittelt.

## Claims

1. Method for detecting the axial play of a transmission shaft (3) engaging with a transmission output (7), in particular of a gear-motor actuator worm shaft engaging with a worm wheel, with said play being detected by determining the translatory positioning travel of the rotary-driven transmission shaft (3) between its axial limit stops (A1 or A2) limiting the axial play with a simultaneously blocked (brake B) transmission output.

2. Method according to Claim 1
- with a commutator motor (1) driving the transmission shaft (3) in a rotary manner;
- with the translatory positioning travel being detected by means of evaluating in an evaluation device (AV) the ripple of the motor current (IM) or motor voltage caused by commutation due to the segments of the commutator (10).

3. Method according to Claim 2
- with the ripple due to commutation being evaluated by means of counting a number of pulses of the motor current (IM) or motor voltage corresponding to the segment transitions of the commutator (10).

4. Method according to at least one of the Claims 1 to 3
- with the transmission shaft (3) being driven by means of an electric motor up to one of its axial limit stops (A1 or A2);
- with driving by means of an electric motor, in particular a constant-current motor, up to the other axial limit stop (A1 or A2);
- with evaluation of the ripple of the motor current (IM) or motor voltage between the two limit stops (A1 or A2).

5. Method according to at least one of the Claims 1 to 4
- with the axial play being set through the intermediate positioning of spacer thrust washers (4) between one end of the transmission shaft and an associated limit stop situated opposite;
- with incorrect, or lack of, equipping with a spacer thrust washer (4) being detected by comparing the respectively actual translatory positioning travel with a nominal positioning travel pre-determined in terms of a defined compensation of axial play.

6. Device set up for realizing the method according to one of the Claims 1 to 5 by means of which the axial play of a transmission shaft driven by an electric motor and engaging with a transmission output is detected
**characterised by**
- a braking device by means of which the transmission output can be blocked and
- an evaluation device which determines the translatory positioning travel of the transmission shaft by evaluating the ripple of the motor current (IM) or motor voltage of the electromotor drive caused by commutation.

## Revendications

1. Procédé de détection du jeu axial d'un arbre de transmission (3) engrenant avec un arbre de sortie (7), en particulier d'un arbre comprenant une vis sans fin engrenant avec une roue tangente d'un servomoteur à motoréducteur, la détection du jeu axial s'effectuant en calculant le parcours de réglage en translation de l'arbre de transmission (3) entraîné en rotation entre ces butées finales axiales (A1 ou A2) limitant le jeu axial avec blocage simultané (frein B) de l'arbre de sortie.

2. Procédé selon la revendication 1
- comprenant un moteur à collecteur (1) entraînant en rotation l'arbre de transmission (3) ;
- comprenant un calcul du parcours de réglage en translation par évaluation de l'ondulation pour des raisons de commutation dues aux lames du collecteur (10) du courant moteur (IM) ou de la tension du moteur dans un dispositif d'évaluation (AV).

3. Procédé selon la revendication 2
- comprenant une évaluation de l'ondulation due à la commutation par comptage d'un nombre d'impulsions du courant moteur (IM) ou de la tension du moteur correspondant aux jonctions entre les lames du collecteur (10).

4. Procédé selon au moins une des revendications 1 à 3
- comprenant un entraînement par moteur électrique de l'arbre de transmission (3) jusqu'à sa butée axiale finale (A1 ou A2) ;
- comprenant un entraînement par moteur électrique, notamment un entraînement à courant constant, jusqu'à l'autre butée axiale finale (A1 ou A2) ;
- comprenant une évaluation d'une ondulation du courant moteur (IM) ou de la tension moteur entre les deux butées finales (A1 ou A2).

5. Procédé selon au moins l'une des revendications 1 à 4 comprenant
- un réglage du jeu axial par une couche intermédiaire de disques de butée intercalaires (4) entre un bout d'arbre de transmission et une butée finale associée lui faisant face ;
- un constat d'un équipement incorrect ou d'un équipement manquant en disque de butée intercalaire (4) par comparaison du parcours de réglage en translation réel respectif avec un parcours de réglage théorique déterminé au préalable au sens d'une compensation définie du jeu axial.

6. Dispositif équipé pour mettre en oeuvre le procédé selon l'une des revendications 1 à 5, au moyen duquel le jeu axial d'un arbre de transmission engrenant avec un arbre de sortie et entraîné par un moteur électrique, est détecté, **caractérisé par**
- un dispositif de freinage, permettant de bloquer l'arbre de sortie, et
- un dispositif d'évaluation, qui calcule le parcours de réglage en translation de l'arbre de transmission en évaluant l'ondulation due à la commutation du courant moteur ou de la tension moteur de l'entraînement par moteur électrique.
